# EUROPEAN PATENT SPECIFICATION

(11) **EP 2 294 370 B1**
(45) Date of publication and mention of the grant of the patent: **25.02.2015**
(21) Application number: 09762745.9
(22) Date of filing: 02.06.2009
(51) Int. Cl.: G01G 19/08, B60K 23/00, B62D 21/00, B60W 40/13

(54) **METHOD AND DEVICE FOR CONTROLLING A FUNCTION OF A VEHICLE.**
VERFAHREN UND VORRICHTUNG ZUR STEUERUNG EINER FAHRZEUGFUNKTION
PROCÉDÉ ET DISPOSITIF POUR COMMANDER UNE FONCTION D'UN VÉHICULE

(30) Priority: 11.06.2008 SE 0801361
(43) Date of publication of application: 16.03.2011
(73) Proprietor: Scania CV AB, 151 87 Södertälje (SE)
(72) Inventor: RONVALL, Lars, S-641 35 Katrineholm (SE)
(86) International application number: PCT/SE2009/050640
(87) International publication number: WO 2009/151376

(56) References cited:
- EP-A1- 0 308 259
- DE-A1- 4 235 570
- DE-A1- 4 439 064
- DE-A1- 19 648 033
- US-A1- 2003 120 455

## Description

### Field of the invention

The present invention relates to vehicle control systems, and in particular to a method for controlling at least one vehicle function according to the preamble of claim 1, and as it is disclosed in DE 19648033A.

### Background of the invention

The driving properties of a vehicle are, to a large extent, dependent on the total weight of the vehicle, and, at least sometimes, also on the individual load on the respective axles. This is true not only when driving, but also when the vehicle is standing still.

There are some situations where the driving properties of a vehicle may differ substantially from the driving properties that are normally exhibited. One such situation often arises during the manufacturing process. For example, when manufacturing busses, the bus chassis are often manufactured at one location to later be transported to a body builder for being built to, e.g., conventional busses. Therefore, a bus chassis is often "just a chassis", with little resemblance to the bus once having been subject to a body builder. For example, in order to facilitate transport of such bus chassis, the distance between front (steering) axle and drive axle is often reduced to a considerable extent in order to allow a larger number of chassis to be loaded, e.g., on a trailer.

This, in turn, gives rise to rather exceptional driving properties. For example, since the engine sometimes is located to the rear of the rear axle(s) in order to allow low flooring, and thereby increased passenger service, e.g. by facilitating embarking and disembarking of the vehicle, the load on the front axle of a chassis having shortened wheelbase can be extremely low and sometimes even negative.

For this reason, it has often been necessary to provide the bus control system with additional programming, e.g. to ensure that ranging and/or driving and or loading the chassis onto a trailer is at all possible. A vehicle chassis leaving a production line is provided with programming for controlling the various functions of the vehicle. This programming is often referred to as "End Of (production) Line" (EOL) programming. However, due to the above, chassis mode changes must often be made to the EOL programming, and these changes often involve substantial changes to functions normally occurring on the vehicle. For example, the service brake system can be set to only brake the rear axle wheels, since braking front axle wheels having negligible load will be of little use.

However, if at least some parts the changes made to the EOL programming are not removed in a proper way before the ready-built bus is delivered, the bus once finished may exhibit dangerous driving properties, e.g. if the service brakes will not use the front axle brakes. Consequently, there exists a need for a method of ensuring that appropriate EOL programming is activated once the vehicle has been ready-built.

### Summary of the invention

It is an object of the present invention to provide a method that solves or at least mitigates the above mentioned problem. This object is achieved by a method according to the characterising portion of claim 1.

According to the present invention, it is provided a method of controlling at least a first function of a vehicle, having the features of claim 1.

The present invention has the advantage that by determining a representation of the load that, e.g., the front axle is subject to by the chassis, it can be determined, e.g. if a bus chassis is still only a chassis, and one or more vehicle functions therefore should be operating according to a first operating mode, such as a chassis mode. Conversely, a high load (weight) on the vehicle front axle can be used to indicate that, e.g., the chassis has been subject to a body build, since the body can be represented by the higher load.

In detecting the status of the vehicle according to the above, it can thereby be ensured that vehicle function operation that is appropriate only in certain situations, such as when a bus chassis is just a chassis, can then be enabled, while if the chassis has been subject to a body build it can be ensured that functions being directly inappropriate for a ready-built vehicle will automatically be deactivated. It is often required that a vehicle during manufacturing is subject to fewer limitations that a ready-built vehicle in order to be able to perform necessary tests, e.g. in terms of speed limitation. The present invention further has the advantage that the programming enabling e.g. "chassis mode" operation automatically can be deactivated.

### Brief description of the drawings

Fig. 1A discloses an exemplary vehicle, provided with an exemplary vehicle level control system according to the present invention.
Fig 1B discloses a portion of the vehicle suspension system of the vehicle in fig. 1A more in detail.
Fig. 2 discloses an exemplary control unit according to the present invention.
Fig. 3 discloses an exemplary embodiment of a method according to the present invention.

### Detailed description of an exemplary embodiment

As was mentioned above, there are situations where it often required to provide a vehicle control system with additional/altered programming, e.g. to facilitate ranging and/or driving and or loading of a bus chassis onto a trailer. As was also mentioned above, this programming often involves changes to EOL programming, and can involve substantial changes to the manner in which vehicle functions normally occur on the vehicle. The changes to the EOL programming can, for example, consist of computer code segments that fully or partially replace the computer code that normally is used to operate a vehicle function, such as a brake system or speed limit restriction. For example, if the weight on the front axle is negative, braking using the front wheels is inappropriate and can therefore be excluded in operation of brake functions in such situations.

Further, when, e.g., a bus chassis is at the end of a manufacturing process, apart from the above mentioned problem of ranging/loading on a trailer, there are often numerous functions that must undergo testing prior to the chassis leaving the manufacturer for body building. For example, the vehicle chassis often undergoes testing on a vehicle dynamometer. In order to drive on to the rolls of the vehicle dynamometer, however, it is often required that the chassis is raised to its maximum height using the vehicle level control system in order to ensure that no part of the chassis will hit the surface below, with possible damages as a result.

As a safety precaution, however, the vehicle is normally programmed such that if, e.g., the vehicle speed exceeds 30 km/h the vehicle will automatically lower itself in order not to endanger driving properties. On the vehicle dynamometer, however, the vehicle is often accelerated up to high speeds in order to perform, e.g., brake tests. If the vehicle level control system should then lower the chassis when the speed on the dynamometer exceeds 30 km/h, the chassis can potentially be damaged. Therefore, there are often changes made to the EOL programming that removes/deactivates this safety function.

Also, functions such that automatic maximum speed limitations are also often deactivated in order to be able to perform, e.g., brake tests and other tests at high and/or maximum speed. When all tests have been performed, the changes made to the EOL programming are removed and the chassis is then subject to body building. If, however, for some reason, this programming is not removed the vehicle can potentially exhibit dangerous driving properties once being taken into traffic as a finished vehicle.

In the prior art, such EOL programming changes must be manually deactivated prior to or during the body building, or at least prior to the vehicle being delivered to a purchaser, since otherwise the bus once finished may exhibit dangerous driving properties.

According to the present invention, however, it can be ensured that inappropriate EOL programming will always be deactivated once the body building is finished or underway.

According to the present invention, this problem is addressed by a method which uses, e.g., a vehicle level control system to automatically determine the manner in which a particular vehicle function should behave. This is accomplished by means of measuring axle load, for example, by using a vehicle level control system according to the exemplary embodiment of the present invention below.

Since the axle pressure of a vehicle (bus) chassis on the front axle is often very low or even negative as explained above, the axle pressure on, e.g., the front axle can be used to determine when "chassis mode" EOL programming is to be active.

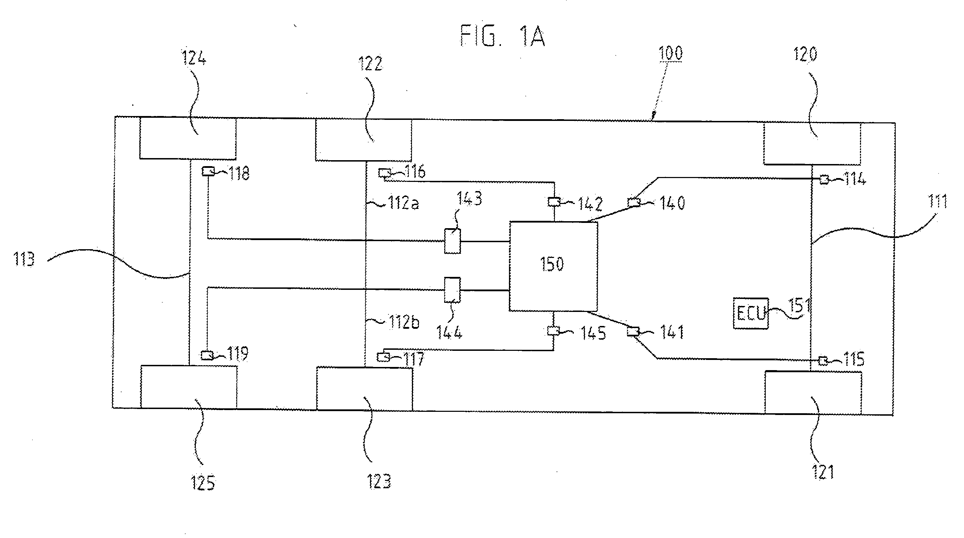

In heavy vehicles, such as trucks, busses and tractors, it is, in general, desirable to have a vehicle level control system, and the vehicle level control system is often used to keep the vehicle chassis at a desired level relative to the vehicle axles during driving, if possible, with regard to current load/load distribution of the vehicle. With regard to urban busses, it can also be used to facilitate for passengers to embark and disembark the vehicle. An exemplary vehicle being provided with such a vehicle level control system is disclosed in fig. 1A-B.

Fig. 1A schematically depicts an exemplary vehicle 100, provided with an exemplary vehicle level control system according to the present invention. The vehicle level control system constitutes part of the vehicle suspension system. The vehicle 100 comprises a steering axle 111 and half shafts 112a, 112b constituting the drive axle of the vehicle 100. The vehicle 100 also comprises a tag axle 113. The vehicle 100 comprises a pneumatic air suspension system, wherein air suspension mechanisms 114-119 is arranged at each wheel 120-125, respectively.

A main function of the air suspension system (level control system) is consequently to adjust and control the level (height) of the vehicle chassis relative to the vehicle axles, and can be used to compensate for varying load levels and varying load distributions. The vehicle level control system can also be used to adjust the load distribution on the vehicle axles (in particular, load distribution among the drive axle and one or more load bearing axles such as tag axle 113. This can, for example, be used to increase the load on the drive axle when driving uphill in slippery conditions by raising the vehicle chassis with respect to the drive axle, and, conversely, to reduce load on a particular axle, e.g. in order to fulfil maximum axle load restrictions.

In the exemplary air suspension system disclosed in fig. 1A, the air suspension (level control) mechanisms 114-119 consists of air suspension bellows that ride on suspension supports, and by appropriately filling the bellows or venting them, the level of the vehicle chassis with respect to the axles can be adjusted within the adjustment range provided by the suspension system (i.e. bellow and bellow support).

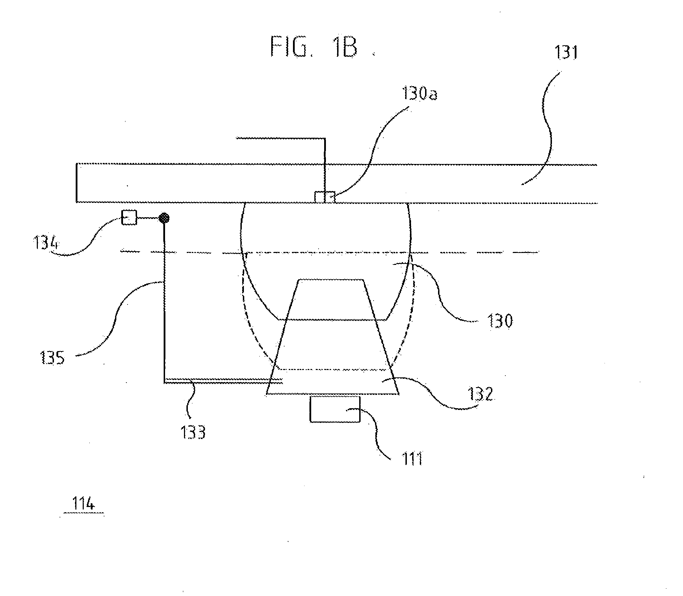

Fig. 1B discloses the suspension mechanism 114 more in detail. The suspension mechanisms 115-119 are similar to the one disclosed in fig. 1B. the suspension mechanism 114 consists of a bellow 130, which is fixed to the vehicle chassis 131. The bellow 130 comprises a connection 130a for pressurized air, the supply of which being controlled by a valve 140. As can be seen from fig. 1A, each of the suspension mechanisms 114-119 (each of the bellows) is controlled by a respective valve 140-145.

The valves 140-145 control the pressures of the bellows by controlling the supply of pressurized air to the bellows from a tank 150. With regard to fig. 1B, the bellow 130 rides on bellow support 132, which is fixed to the axle 111. By appropriately controlling the pressure of the air supplied to the bellow 130, the level of the bellow with respect to the bellow support 132 can be controlled, and thereby the level of the chassis 132 with respect to the axles can be controlled.

For example, if the bellow pressure is high, a smaller portion of the bellow support 132 will penetrate the bellow 130, and the position of the chassis with respect to the axle can be as disclosed in fig. 1B with solid lines, while if the bellow pressure, on the other hand, is low, the position of the bellow 130 (and thereby chassis) can be as disclosed by dashed lines. The bellow support 132 or axle further comprises a support 133 for carrying a lever 135 acting as an indicator of the axle-chassis distance and constituting part of a level sensor 134 arranged on the chassis.

As an alternative to controlling each bellow by an individual valve 140-145, bellows on a common axle, e.g. bellows of support mechanisms 114, 115, can be controlled by a common valve.

According to the present invention, the bellow pressure is used to determine the load on, e.g., the front axle, that is, the axle load can, for example, be represented by the bellow pressure of the bellows 114, 115. If this bellow pressure is below a threshold, it can be determined that at least some vehicle functions, such as brake system, maximum speed, vehicle height, should be controlled according to the "chassis mode" EOL programming, while if the axle pressure on the front axle is above the said threshold, the said functions should be controlled by the programming intended for use once the vehicle has been taken into traffic.

Consequently, the present invention provides a simple yet reliable manner in which parts of the EOL programming can be deactivated once it no longer is intended to be used. Apart from detecting a low pressure on the front axle the pressure, at least in some situations, pressure of the rear axle can also be used for the above detection. It is also contemplated that a combination of pressures of two or more axles are used in the said determination.

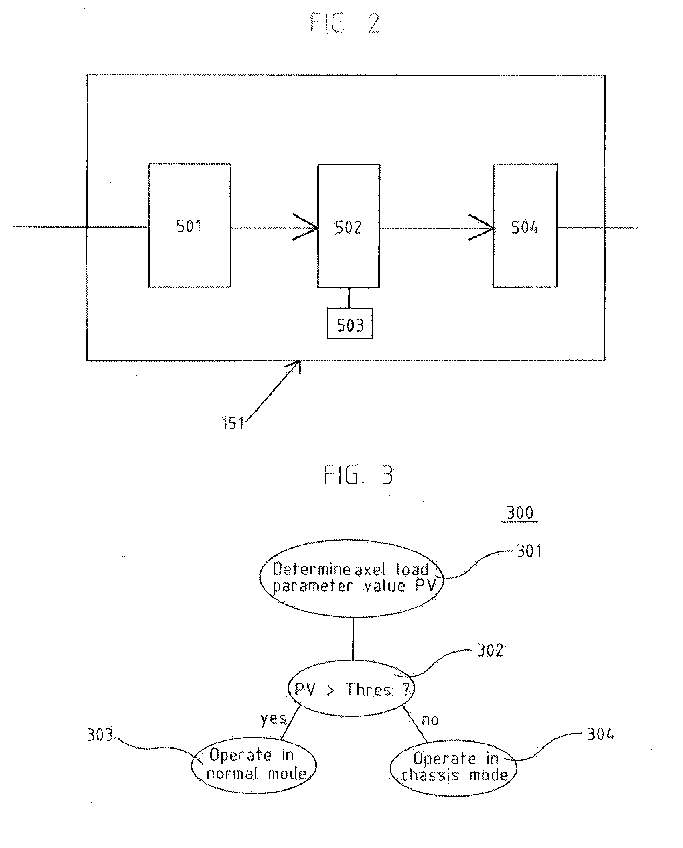

An exemplary method according to the present invention is disclosed in fig. 3. The method starts in step 301, wherein a parameter value representing front axle load is determined using the bellow pressure according to the above. The method then continues to step 302, wherein the determined parameter value is compared with a threshold, wherein the said threshold represents an axle load which ensures that the chassis is no longer merely a chassis. If the parameter value exceeds the threshold, the method continues to step 303, wherein the vehicle functions are set to operate according to a "normal" operating mode. If, on the other hand, the determined parameter value is below the said threshold, the method continues to step 304, wherein at least some vehicle functions are set to operate according to, e.g., a chassis mode.

The bellow pressure can advantageously be measured using the said valves 140-145, although it is also contemplated that separate pressure sensors can also be used, which sensors can transmit signals to, e.g., an electronic control unit 151. The ECU 151 constitutes part of the vehicle control system. Vehicle control systems in modern vehicles usually consist of a communication bus system consisting of one or more communication busses to interconnect various electronic control units and components located on the vehicle. Consequently, the signals to/from valves 140-145 can, for example, be connected to the ECU 151 by means of a suitable communication bus. Further, in fig. 1A the ECU 151 is exemplified as a standalone control unit. It is to be understood, however, that suspension control and level control, instead of being controlled by a dedicated control unit 151, can be implemented as part of any suitable control unit of the vehicle, e.g. any of the various control units that generally are present in, e.g., a heavy vehicle.

In fig. 2 the ECU 151 is shown more in detail. ECU 151 comprises means 501 for receiving signals from, e.g., the various sensors according to the above. These signals can be received, e.g., via messages transmitted on a communication bus, such as a CAN bus, or by direct links to ECU 151. The received signals, together with other information, such as data transmitted from other control units, e.g. signals representing vehicle speed, can then be used in a data processing unit 502. The data processing unit 502 can, using the received sensor signals and data, and by means of a computer program, which, e.g., can be stored in a computer program product in form of storage means 503 in, or connected to the processing unit 502, perform calculations for determining front axle load and determine in which mode at least some of the vehicle functions should operate. The ECU 151 can then transmit control signals, by means of output means 504, to, e.g., other control units of the vehicle so that these control units can control appropriate vehicle functions according a desired operating mode. The storage means can, for example, consist of one or more from the group: ROM (Read-Only Memory), PROM (Programmable Read-Only Memory), EPROM (Erasable PROM), Flash memory, EEPROM (Electrically Erasable PROM), hard disk drive. As an alternative to implementing the operating mode determination in the ECU 151, the present invention can be implemented in any suitable electrical control unit of the vehicle control system, in which case the ECU simply transmits a representation of the axle load to the said other control unit.

Further, instead of measuring bellow pressure it is, of course, also possible to use any other suitable kind of sensor by means of which it is possible to determine a representation of the axle pressure, and, consequently, it is not required to use a vehicle level control system to implement the present invention.

## Claims

1. Method of controlling at least a first function of a vehicle, wherein the said vehicle comprises means for determining a parameter value representing the load on at least one axle, wherein the method comprises the steps of:
- determining a parameter value (PV) representing a load on the said at least one axle (301), and,
- if the said parameter value (PV) is below a first threshold, operating the said first vehicle function according to a first operating mode (304), and if said parameter value is above the said first threshold, operating the said first function according to a second operating mode (303), the said second operating mode being different from the said first operating mode, **characterized in that** at least one of the said operating modes is a chassis mode for use at vehicle chassis prior to the chassis being subject to a body build.

2. Method according to claim 1, wherein said first operating mode consists of operating the said first vehicle function according to a first computer program, and wherein said second operating mode consists of operating the said first vehicle function according to a second computer program, being different from the said first computer program.

3. Method according to any of the claims 1-2, wherein a plurality of vehicle functions are operated according to the said first operating mode or the said second operating mode on the basis of the said determination.

4. Method according to any of the preceding claims, wherein a plurality of vehicle functions are operated according to a first set of function parameters if the said parameter value is below the said first threshold, and operating the said plurality of vehicle functions according to a second set of function parameters if the said parameter value is above the said first threshold, the said second set of function parameters being different from said first set of functions parameters.

5. Method according to any of the preceding claims, wherein parameter values representing the load on a plurality vehicle axles are determined, and wherein the said function or functions is/are operated according to the said first or second operating mode on the basis of the said parameter values.

6. Method according to any of the preceding claims, wherein the said parameter value representing the axle load is determined by detecting at least one pressure.

7. Method according to any of the preceding claims, wherein the said axle or axles is one or more from the group: steering axle, drive axle, tag axle.

8. Method according to any of the preceding claims, wherein the said vehicle function or functions comprises at least one from the group: speed limit setting, brake system operation, vehicle level operation.

9. Device of controlling at least a first function of a vehicle (100), wherein the said vehicle comprises means for determining a parameter value (PV) representing the load on at least one axle, and,
- means for, if the said parameter value is below a first threshold, operating the said first vehicle function according to a first operating mode, and if said parameter value is above the said first threshold, operating the said first function according to a second operating mode, the said second operating mode being different from the said first operating mode, **characterized in that** at least one of the said operating modes is a chassis mode for use at vehicle chassis prior to the chassis being subject to a body build.

10. Vehicle, **characterised in that** it includes a device according to claim 9.

## Patentansprüche

1. Verfahren zum Steuern zumindest einer ersten Funktion eines Fahrzeugs, wobei das Fahrzeug eine Einheit zum Ermitteln eines die Belastung an wenigstens einer Achse darstellenden Parameterwertes umfasst, und wobei das Verfahren die Schritte umfasst:
- Ermitteln eines eine Belastung an der wenigsten einen Achse (301) darstellenden Parameterwertes (PV), und
- Betätigen der ersten Fahrzeugfunktion entsprechend einem ersten Betriebsmodus (304), wenn der Parameterwert (PV) kleiner ist als ein erster Schwellenwert, und Betätigen der ersten Fahrzeugfunktion entsprechend einem zweiten Betriebsmodus (303), wenn der Parameterwert größer ist als der erste Schwellenwert, wobei sich der zweite Betriebsmodus von dem ersten Betriebsmodus unterscheidet, **dadurch gekennzeichnet, dass** zumindest einer der Betriebsmodi ein Chassisbetriebsmodus für Fahrzeugchassis ist, bevor diese einem Karosseriebau unterzogen werden.

2. Verfahren nach Anspruch 1, wobei der erste Betriebsmodus ein Betätigen der ersten Fahrzeugfunktion entsprechend einem ersten Computerprogramm umfasst, und wobei der zweite Betriebsmodus ein Betätigen der ersten Fahrzeugfunktion entsprechend einem zweiten Computerprogramm, das sich von dem ersten Computerprogramm unterscheidet, umfasst.

3. Verfahren nach einem der Ansprüche 1 bis 2, wobei auf Grundlage der Ermittlung eine Betätigung einer Vielzahl von Fahrzeugfunktionen entsprechend dem ersten Betriebsmodus oder dem zweiten Betriebsmodus erfolgt.

4. Verfahren nach einem der vorangegangenen Ansprüche, wobei eine Betätigung einer Vielzahl von Fahrzeugfunktionen entsprechend einem ersten Funktionsparametersatz erfolgt, wenn der Parameterwert kleiner ist als der erste Schwellenwert, und eine Betätigung der Vielzahl von Fahrzeugfunktionen entsprechend einem zweiten Funktionsparametersatz erfolgt, wenn der Parameterwert größer ist als der erste Schwellenwert, wobei sich der zweite Funktionsparametersatz von dem ersten Funktionsparametersatz unterscheidet.

5. Verfahren nach einem der vorangegangenen Ansprüche, wobei Parameterwerte, die die Belastung an einer Vielzahl von Achsen darstellen, ermittelt werden, und wobei auf Grundlage der Parameterwerte eine Betätigung der Funktion oder der Funktionen entsprechend dem ersten oder zweiten Betriebsmodus erfolgt.

6. Verfahren nach einem der vorangegangenen Ansprüche, wobei eine Ermittlung des die Achsbelastung darstellenden Parameterwertes durch Erfassen zumindest eines Druckwertes erfolgt.

7. Verfahren nach einem der vorangegangenen Ansprüche, wobei die Achse oder die Achsen eine oder mehrere Achsen aus der Gruppe: Lenkachse, Antriebsachse, Nachlaufachse ist/sind.

8. Verfahren nach einem der vorangegangenen Ansprüche, wobei die Fahrzeugfunktion oder die Fahrzeugfunktionen zumindest eine Funktion aus der Gruppe:
Geschwindigkeitsbegrenzungseinstellung, Bremssystembetrieb, Fahrzeug-Niveau-Betrieb umfasst/umfassen.

9. Vorrichtung zum Steuern zumindest einer ersten Funktion eines Fahrzeugs (100), wobei das Fahrzeug eine Einheit zum Ermitteln eines die Belastung an zumindest einer Achse darstellenden Parameterwertes (PV) und eine Einheit zum Betätigen der ersten Fahrzeugfunktion entsprechend einem ersten Betriebsmodus, wenn der Parameterwert kleiner ist als ein erster Schwellenwert, und zum Betätigen der ersten Funktion entsprechend einem zweiten Betriebsmodus, wenn der Parameterwert größer ist als der erste Schwellenwert, wobei sich der zweite Betriebsmodus von dem ersten Betriebsmodus unterscheidet, umfasst,
**dadurch gekennzeichnet, dass** zumindest einer der Betriebsmodi ein Chassisbetriebsmodus für Fahrzeugchassis ist, bevor diese einem Karosseriebau unterzogen werden.

10. Fahrzeug, **dadurch gekennzeichnet, dass** dieses eine Vorrichtung nach Anspruch 9 umfasst.

## Revendications

1. Procédé pour commander au moins une première fonction d'un véhicule, dans lequel ledit véhicule comprend des moyens pour déterminer une valeur de paramètre représentant la charge sur au moins un essieu, dans lequel le procédé comprend les étapes consistant à :
- déterminer une valeur de paramètre (PV) représentant une charge sur ledit au moins un essieu (301 ), et
- si ladite valeur de paramètre (PV) est inférieure à un premier seuil, piloter ladite première fonction de véhicule selon un premier mode de fonctionnement (304), et si ladite valeur de paramètre est supérieure audit premier seuil, piloter ladite première fonction selon un deuxième mode de fonctionnement (303), ledit deuxième mode de fonctionnement étant différent dudit premier mode de fonctionnement, **caractérisé en ce qu'**au moins l'un desdits modes de fonctionnement est un mode de châssis pour l'utilisation au niveau d'un châssis de véhicule avant que le châssis ne soit soumis à une construction de caisse.

2. Procédé selon la revendication 1, dans lequel ledit premier mode de fonctionnement consiste en un pilotage de ladite première fonction de véhicule selon un premier programme d'ordinateur, et dans lequel ledit deuxième mode de fonctionnement consiste en un pilotage de ladite première fonction de véhicule selon un deuxième programme d'ordinateur, qui est différent dudit premier programme d'ordinateur.

3. Procédé selon l'une quelconque des revendications 1 à 2, dans lequel une pluralité de fonctions de véhicule sont pilotées selon ledit premier mode de fonctionnement ou ledit deuxième mode de fonctionnement en fonction de ladite détermination.

4. Procédé selon l'une quelconque des revendications précédentes, dans lequel une pluralité de fonctions de véhicule sont pilotées selon un premier jeu de paramètres de fonction si ladite valeur de paramètre est inférieure audit premier seuil, et ladite pluralité de fonctions de véhicule sont pilotées selon un deuxième jeu de paramètres de fonction si ladite valeur de paramètre est supérieure audit premier seuil, ledit deuxième jeu de paramètres de fonction étant différent dudit premier jeu de paramètres de fonction.

5. Procédé selon l'une quelconque des revendications précédentes, dans lequel des valeurs de paramètre représentant la charge sur une pluralité d'essieux de véhicule sont déterminées, et dans lequel ladite fonction ou lesdites fonctions est/sont pilotées selon lesdits premier ou deuxième modes de fonctionnement en fonction desdites valeurs de paramètre.

6. Procédé selon l'une quelconque des revendications précédentes, dans lequel ladite valeur de paramètre représentant la charge d'essieu est déterminée par la détection d'au moins une pression.

7. Procédé selon l'une quelconque des revendications précédentes, dans lequel ledit essieu ou lesdits essieux sont l'un ou plusieurs parmi le groupe : essieu de direction, essieu moteur, essieu traîné.

8. Procédé selon l'une quelconque des revendications précédentes, dans lequel ladite fonction ou lesdites fonctions de véhicule comprennent au moins l'une parmi le groupe : établissement de limite de vitesse, fonctionnement du système de frein, opération de niveau de véhicule.

9. Dispositif de commande d'au moins une première fonction d'un véhicule (100), dans lequel ledit véhicule comprend des moyens pour déterminer une valeur de paramètre (PV) représentant la charge sur au moins un essieu, et
- des moyens pour, si ladite valeur de paramètre est inférieure à un premier seuil, piloter ladite première fonction de véhicule selon un premier mode de fonctionnement, et, si ladite valeur de paramètre est supérieure audit premier seuil, piloter ladite première fonction selon un deuxième mode de fonctionnement, ledit deuxième mode de fonctionnement étant différent dudit premier mode de fonctionnement, **caractérisé en ce qu'**au moins l'un desdits modes de fonctionnement est un mode de châssis pour l'utilisation au niveau d'un châssis de véhicule avant que le châssis ne soit soumis à une construction de caisse.

10. Véhicule, **caractérisé en ce qu'**il comprend un dispositif selon la revendication 9.
